# EUROPÄISCHE PATENTSCHRIFT

(11) **EP 2 178 972 B1**
(45) Veröffentlichungstag und Bekanntmachung des Hinweises auf die Patenterteilung: **03.08.2016**
(21) Anmeldenummer: 08760173.8
(22) Anmeldetag: 29.05.2008
(51) Int. Cl.: C08F 287/00, C08F 289/00, C08F 291/00, C08G 18/63, C08G 18/12, C08G 18/40, C08L 33/06, C08L 33/08, C08L 51/00, C08L 51/08, C08L 67/06, C08L 67/07, C09J 11/08, C09J 133/06, C09J 151/00, C09J 151/08, C09J 167/06

(54) **KLEBSTOFFE AUF DER BASIS VON POLYESTER-PFROPF-POLY(METH)ACRYLAT-COPOLYMEREN**
ADHESIVES BASED ON POLYESTER GRAFT POLY(METH)ACRYLATE COPOLYMERS
COLLE À BASE DE COPOLYMÈRES DE POLYESTER-POLY(MÉTH)ACRYLATE GREFFÉ

(30) Priorität: 16.08.2007 DE 102007038807
(43) Veröffentlichungstag der Anmeldung: 28.04.2010
(73) Patentinhaber: Evonik Degussa GmbH, 45128 Essen (DE)
(72) Erfinder: BRENNER, Gabriele, 48249 Dülmen (DE); KOSCHABEK, René, 68259 Mannheim (DE); BALK, Sven, 60594 Frankfurt (DE); BRAND, Thorsten, 45772 Marl (DE); LÖHDEN, Gerd, 45136 Essen (DE)
(86) Internationale Anmeldenummer: PCT/EP2008/056581
(87) Internationale Veröffentlichungsnummer: WO 2009/021763

(56) Entgegenhaltungen:
- EP-A- 0 542 105
- WO-A-03/010256
- WO-A-2007/098819
- US-A1- 2004 044 117

## Beschreibung

Die vorliegende Erfindung betrifft gemäß Anspruch 1 die Verwendung von Mischungen umfassend Polymertypen A, B und AB als Klebstoff oder in Klebstoffen, wobei der Polymertyp A ein Copolyester ist, der unter Co-Kondensation von ungesättigten, aliphatischen Dicarbonsäuren hergestellt wurde, der Polymertyp B ein (Meth)acrylathomo- und/oder -copolymer und der Polymertyp AB ein Pfropfcopolymer aus Polymertyp A und Polymertyp B ist.

Reaktive Schmelzklebstoffe sind bei Raumtemperatur feste Substanzen. Sie werden durch Erwärmen aufgeschmolzen und auf die zu fügenden Substrate aufgebracht. Beim Abkühlen verfestigen sich die Klebstoffe wieder und binden somit die Substrate. Zusätzlich vernetzen die im Klebstoff enthaltenen Polymere durch Reaktion mit Feuchtigkeit, wodurch ein endgültiges, irreversibles Aushärten erfolgt.

Für viele Anwendungen, beispielsweise der Flächenkaschierung zur Herstellung von Sandwichelementen, ist es erforderlich, dass der reaktive Schmelzklebstoff eine lange offene Zeit hat, um die zu verklebenden Teile fügen zu können. Als offene Zeit wird der Zeitraum verstanden, innerhalb der der Klebstoff verarbeitet werden kann. Zugleich soll der Klebstoff nach der Applikation rasch abbinden und genügend Anfangsfestigkeit aufbauen, um eine sofortige weitere Verarbeitung zu ermöglichen. Die Klebfuge soll möglichst elastisch sein. Nach Aushärtung sollen die Kohäsion, thermische Beständigkeit und Lösungsmittelbeständigkeit sehr hoch sein. Dies stellt bei den bisher bekannten reaktiven Schmelzklebstoffen ein Problem dar.

Reaktive Schmelzklebstoffe werden beispielsweise von H.F. Huber und H. Müller in dem Artikel "Shaping Reactive Hotmelts Using LMW Copolyesters" in Adhesives Age, November 1987, Seiten 32 - 35, beschrieben. Sie bestehen aus Kombinationen von amorphen und kristallinen Polyestern und deren Reaktionsprodukten mit Isocyanaten.

In der DE 38 27 224 werden feuchtigkeitshärtende isocyanatfunktionelle Schmelzklebstoffe mit besonders hoher Abbindegeschwindigkeit beschrieben, deren Polyesterrückgrat bevorzugt rein aliphatisch ist und von mindestens 12 bis zu maximal 26 Methylengruppen in der Repetiereinheit aus Diol und Dicarbonsäuren enthalten, wobei Dicarbonsäuren mit 8 - 12 Methylengruppen verwendet werden. Die hohe Abbindegeschwindigkeit korreliert mit einer kurzen offenen Zeit.

In der US 5,021,507 werden Urethanpräpolymere mit nicht funktionalisierten Polymeren aus ethylenisch ungesättigten Monomeren gemischt, um die Anfangsfestigkeit und Hafteigenschaften zu verbessern. Typischerweise werden als Polymere Polyalkyl(meth)acrylate mit C₁- bis C₁₂-Alkylgruppen verwendet. Diese werden aus den entsprechenden Monomeren entweder vor der Zugabe zu den Urethanpräpolymeren oder in deren Beisein durch freie, radikalische Polymerisation polymerisiert. Da die Polyalkyl(meth)acrylate nicht chemisch vernetzen, ist die Wärme- und Lösemittelbeständigkeit des Klebstoffs unzureichend.

Die US 5,866,656 und die WO 99/28363 beschreiben lösungsmittelfreie, feuchtigkeitshärtende Polyurethanklebstoffe, die bei Raumtemperatur fest sind, bestehend aus einem Reaktionsprodukt aus einem Polyisocyanat und einem niedrigmolekularen Polymer aus ethylenisch ungesättigten Monomeren, wobei das Polymer aktive Wasserstoffatome trägt sowie mindestens einem Polyurethan-präpolymeren mit freien Isocyanatgruppen, hergestellt aus mindestens einem Polyol und einem Polyisocyanat. Das Polyol kann ein Polyetherdiol, Polyethertriol, Polyesterpolyol, aromatisches Polyol oder eine Mischung daraus sein. Das niedrigmolekulare Polymer aus ethylenisch ungesättigten Monomeren ist ein Poly(meth)acrylat, das durch freie radikalische Polymerisation hergestellt wird. Die typische Zusammensetzung besteht aus Polypropylenglykol, hydroxylhaltigem Poly(meth)acrylat, 4,4'-Diphenylmethandiisocyanat und Polyesterdiol. Die so erhaltenen Reaktivklebstoffe zeichnen sich gegenüber denen aus US 5,021,507 durch eine längere offene Zeit und eine verbesserte Haftung zu Metallen bzw. fluoriertem Polyethylen oder Hart-PVC aus. Der extrahierbare Anteil in den ausgehärteten Klebstoffen ist zwar reduziert, aber immer noch sehr hoch. Dies verringert unter anderem die Lösemittel- und Temperaturbeständigkeit der Klebstoffe. Ein weiterer Nachteil dieser Klebstoffe besteht in der Gefahr der Gelierung der Polyalkyl(meth)acrylate mit OH- oder NH- Funktionalität bei Umsetzung mit Isocyanaten. Zudem weisen diese Klebstoffe keine ausreichende Viskositätsstabilität in der Schmelze bei 130 °C auf, wodurch die Verarbeitbarkeit erschwert wird. Ein weiteres Problem ist der hohe Gehalt an Polyetherpolyolen wie Polypropylenglykol. Polypropylenglykol erhöht zwar die Elastizität des Klebstoffs und wirkt als Verträglichkeitsvermittler von Polyalkyl(meth)acrylaten und Polyesterdiolen, Polyetherpolyole haben aber Nachteile in der Oxidations- und thermischen Beständigkeit und vermindern die Anfangsfestigkeit und Kohäsion.

EP 1 678 235 beschreibt Reaktivschmelzklebstoffe enthaltend Poly(meth)acrylate mit Hydroxylgruppen und/oder Aminogruppen und/oder Mercaptogruppen, die eine Polydispersität D von kleiner 1,8 aufweisen und durch anionische Polymerisation, RAFT oder ATRP hergestellt werden. Die Reaktivschmelzklebstoffe weisen verbesserte Eigenschaften gegenüber den in der US 5,866,656 und die WO 99/28363 offenbarten Klebstoffen in Bezug auf Verarbeitungsstabilität, Zugscherfestigkeit und Lösemittelbeständigkeit auf. Die Polymerisation und Aufarbeitung der eng verteilten Polyalkyl(meth)acrylate ist aber sehr aufwendig.

Es bestand daher die Aufgabe zur Entwicklung von verbesserten Zusammensetzungen, die sich für den Einsatz als Klebstoff, insbesondere als Schmelzklebstoff eignen. Die für die Schmelzklebstoffe eingesetzten Rohstoffe sollen leicht und kostengünstig zugänglich sein. Eine bessere Verträglichkeit der einzelnen Polymerkomponenten, speziell von Polyacrylaten und Polyestern, ist für eine problemlose Applikation wünschenswert. Überraschenderweise wird die Aufgabe durch die Verwendung spezifischer Polymermischungen in Klebstoffen und die Bereitstellung eines Klebstoffs gemäß den Ansprüchen gelöst.

Ein erster Gegenstand der vorliegenden Erfindung ist demgemäß die Verwendung gemäß Anspruch 1 von Mischungen umfassend Polymertypen A, B und AB als Klebstoff oder in Klebstoffen, wobei der
➢ Polymertyp A ein Copolyester ist, der unter Co-Kondensation von ungesättigten, aliphatischen Dicarbonsäuren hergestellt wurde,
➢ der Polymertyp B ein (Meth)acrylathomo- und/oder -copolymer und
➢ der Polymertyp AB ein Pfropfcopolymer aus Polymertyp A und Polymertyp B ist.

### Der Polymertyp A

Als Polymertyp A werden erfindungsgemäß Copolyester verwendet, die sich durch ungesättigte, aliphatische Dicarbonsäuren als Monomerbaustein auszeichnen. Die Copolyester im Sinne der Erfindung haben eine lineare oder verzweigte Struktur und sind gekennzeichnet durch
- OH-Zahlen von 5 bis 150 mg KOH/g, vorzugsweise von 10 bis 70 mg KOH/g
- Säurezahlen von unter 10 mg KOH g, bevorzugt unter 5 mg KOH/g und besonders bevorzugt unter 2 mg KOH/g
- ein zahlenmittleres Molekulargewicht von 700 - 25000 g/mol, vorzugsweise 2000 - 12000 g/mol.

Die Hydroxylzahl (OH-Zahl) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die Säurezahl wird bestimmt nach DIN EN ISO 2114. Unter der Säurezahl (SZ) versteht man dabei diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Das Molekulargewicht wird bestimmt mittels Gelpermeationschromatographie (GPC). Charakterisierung der Proben erfolgte in Tetrahydrofuran als Eluent nach DIN 55672-1.
Mₙ (UV) = Zahlenmittleres Molgewicht (GPC, UV-Detektion), Angabe in g/mol
M_{w} (UV) = Massenmittleres Molgewicht (GPC, UV-Detektion), Angabe in g/mol

Der Gehalt an ungesättigten, aliphatischen Dicarbonsäuren in den erfindungsgemäßen Copolyestern liegt im Bereich zwischen 0,1 Mol-% und 20 Mol-%, bevorzugt zwischen 1 Mol-% und 10 Mol-% und ganz besonders bevorzugt zwischen 2 Mol-% und 8 Mol-%, bezogen auf die Gesamtmenge an eingesetzten Polycarbonsäuren. Ansonsten ist die Art der für die Copolyester eingesetzten Polycarbonsäuren an sich beliebig. So können aliphatische und/oder cycloaliphatische und/oder aromatische Polycarbonsäuren und/ oder Dimerfettsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für ungesättigte, aliphatische Dicarbonsäuren sind Fumarsäure, Maleinsäure, Itaconsäure und ihre veresterbaren Derivate.

In einer besonders bevorzugten Ausführungsform handelt es sich bei der ungesättigten, aliphatischen Dicarbonsäure um Itaconsäure.

Beispiele für aliphatische Polycarbonsäuren sind Bernsteinsäure, Glutarsäure, Adipinsäure, Pimelinsäure, Azelainsäure, Sebacinsäure, Undecandisäure, Dodecandisäure, Tridecandisäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Copolyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Neben Polyolen und Dicarbonsäuren können auch Lactone für die Synthese der Copolyester verwendet werden.

Die erfindungsgemäßen Copolyester mit Gehalten an ungesättigten, aliphatischen Dicarbonsäuren zwischen 0,1 Mol-% und 20 Mol-%, bevorzugt zwischen 1 Mol-% und 10 Mol-% und ganz besonders bevorzugt zwischen 2 Mol-% und 8 Mol-%, bezogen auf die Gesamtmenge an eingesetzten Polycarbonsäuren, werden mittels etablierter Techniken für (Poly-)Kondensationsreaktionen hergestellt. Sie können z. B. durch Kondensation von Polyolen und Polycarbonsäuren oder deren Ester, Anhydride oder Säurechloride in einer Inertgasatmosphäre bei Temperaturen von 100 bis 260 °C, vorzugsweise von 130 bis 240 °C, in der Schmelze oder in azeotroper Fahrweise gewonnen werden, wie es z. B. in "Methoden der Organischen Chemie (Houben-Weyl)", Bd. 14/2, 1 - 5, 21 - 23, 40 - 44, Georg Thieme Verlag, Stuttgart, 1963, bei C. R. Martens, Alkyl Resins, 51 - 59, Reinhold Plastics Appl., Series, Reinhold Publishing Comp., New York, 1961 oder in DE 27 35 497 und 30 04 903, beschrieben ist.

Die Mengen, die an Polymertyp A vor der Pfropfreaktion in der erfindungsgemäßen Mischung eingesetzt werden, liegen zwischen 10 Gew.-% und 90 Gew.-%, bevorzugt zwischen 20 Gew.-% und 80 Gew.-% und ganz besonders bevorzugt zwischen 25 Gew.-% und 60 Gew.-%.

Die Mengen, die an Polymertyp A in der erfindungsgemäßen Mischung nach der Reaktion vorliegen, liegen zwischen 1 Gew.-% und 80 Gew.-%, bevorzugt zwischen 1 Gew.-% und 60 Gew.-% und ganz besonders bevorzugt zwischen 5 Gew.-% und 40 Gew.-%.

### Der Polymertyp B

Der Polymertyp B kann als Nebenprodukt bei der Synthese des Pfropfcopolymerisats AB entstehen. Die Zusammensetzung der B-Ketten in dem Produktbestandteil AB entspricht ebenfalls der folgenden Beschreibung:
Das (Meth)acrylathomo- und/oder -copolymer besteht definitionsgemäß aus Polyacrylat- und/oder Polymethacrylat-Sequenzen.
Das Poly(meth)acrylat ist im Allgemeinen zu mehr als 50 Gew.-%, vorzugsweise zu 80 Gew.-% bis 100 Gew.-% aufgebaut aus Monomeren der Formel I 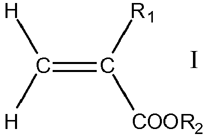
worin R₁ für Wasserstoff oder Methyl und R₂ für einen Alkylrest, einen aliphatischen oder aromatischen Rest mit 1 bis 30 Kohlenstoffatomen, vorzugsweise 1 bis 20 Kohlenstoffatomen, steht.

Im Poly(meth)acrylat können ferner als Bausteine enthalten sein: Monomere der Formel II 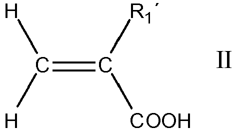 worin R'₁ für Wasserstoff oder Methyl steht oder/und polymerisationsfähige Säureanhydride und/oder Monomere der Formel III 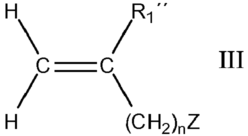 worin R"₁ Wasserstoff oder Methyl und Z einen -C(O)R₃-Rest, einen -OC(O)R₃-Rest, einen -OR₄-Rest oder ein Chloratom bedeutet und worin R₃ und R₄ für einen gegebenenfalls verzweigten Alkylrest mit 1 bis 20 Kohlenstoffatomen oder für einen Phenylrest und n für 0 oder 1 steht, und/oder Monomere der Formel IV 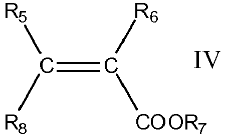 worin R₅ und R₆ Wasserstoff oder einen Rest -COOR'₇, R₆, Wasserstoff oder einen Rest -CH₂COOR"₇ bedeuten mit der Maßgabe, dass die Verbindung der Formel IV zwei carboxylhaltige Gruppen enthalten muss und worin R₇, R'₇ und R"₇ für Wasserstoff oder einen gegebenenfalls verzweigten Alkylrest mit 1 bis 20 Kohlenstoffatomen oder Phenyl stehen. Das Poly(meth)acrylat kann gegebenenfalls noch Anteile der Monomeren der Formel V enthalten 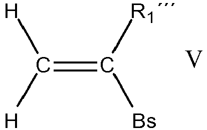 worin R"'₁ die Bedeutung von R₁ besitzt und Bs für einen stickstoffhaltigen funktionellen Rest wie eine -CN Gruppe, eine Gruppe -CONR₉R₁₀ worin R₉ und R₁₀ unabhängig voneinander für Wasserstoff oder einen Alkylrest mit 1 bis 20 Kohlenstoffatomen steht, oder worin R₉ und R₁₀ unter Einbeziehung des Stickstoffs einen heterocyclischen 5- oder 6-Ring bilden oder worin Bs für einen (inerten) heterocyclischen Rest, insbesondere einen Pyridin-, Pyrrolidin-, Imidazol-, Carbazol-, Lactam-Rest bzw. alkylierte Derivate derselben steht oder Bs die Bedeutung -CH₂OH besitzt, oder worin Bs die Bedeutung

-COO-Q-R₁₁

besitzt, worin Q für einen, gegebenenfalls alkylsubstituierten Alkylenrest mit 2 bis 8 Kohlenstoffatomen und R₁₁, für -OH, für -OR"'₇ oder für einen Rest-NR'₉R'₁₀ steht, wobei R"'₇, R'₉ und R'₁₀ die gleichen Bedeutungen wie R₇, R₈ und R₉ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Das Poly(meth)acrylat kann gegebenenfalls noch Anteile der Monomeren der Formel VI enthalten 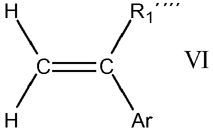 worin R""₁ die Bedeutung von R₁ besitzt und Ar für einen Aromaten steht. Dieser Aromat kann aus einem oder mehreren Ringen bestehen und Alkylgruppen und/oder funktionellen Gruppen tragen.

Als Beispiele für die Monomere der Formel I werden Methylmethacrylat, Ethylmethacrylat, Propylmethacrylat, Butylmethacrylat, Isobutylmethacrylat, Ethylhexylmethacrylat, Methylacrylat, Ethylacrylat, Propylacrylat, Butylacrylat und Isobutylacrylat genannt. Die Monomere der Formel I werden auch als Standard(meth)acrylate bezeichnet.

Als Beispiele für die Monomere der Formel II werden Acrylsäure oder Methacrylsäure genannt.
Als Beispiele für Monomeren der Formeln III bzw. IV seien besonders genannt Vinylchlorid, Vinylacetat, Vinylstearat, Vinylmethylketon, Vinylisobutyläther, Allylacetat, Allylchlorid, Allylisobutylether, Allylmethylketon, Dibutylmaleinat, Dilaurylmaleinat, Dibutylitaconat. Als Monomeren der Formel V seien C- und N-Vinylpyridin sowie Vinylpyrrolidin, Vinylpyrrolidon, Vinylcarbazol, Vinylimidazol sowie deren Alkylderivate, insbesondere die N-Vinylverbindungen genannt, ebenso die Hydroxyl- und Dialkylaminoalkylester der Acryl- bzw. der Methacrylsäure, speziell Dimethylaminoethyl(meth)acrylat, Dirnethylaminopropyl(meth)acrylat oder Hydroxyethyl(meth)acrylat. Die Schreibweise (Meth)acrylat beschreibt dabei sowohl Ester der Acrylsäure als auch Ester der Methacrylsäure. Als Beispiele für Monomeren der Formel VI seien besonders Styrol und Methylstyrole genannt.
Der Anteil der Monomeren der Formel II-VI am Polymer B liegt im Allgemeinen zwischen 0 Gew.-% und 50 Gew.-%, vorzugsweise bei 0 Gew.-% bis 20 Gew.-%, (bezogen auf die Monomeren des Polymer B). Der Anteil der Monomeren der Formeln II und/oder IV und/oder V am Poly(meth)acrylat wird im Allgemeinen 20 Gew.-% nicht überschreiten, in der Regel liegt er bei 0 Gew.-% bis 10 Gew.-%, vorzugsweise 0 Gew.-% bis 5 Gew.-%.

In einer bevorzugten Ausführungsform sind keine Monomere der Formel V enthalten, insbesondere bevorzugt wird auf den Einsatz von Monomeren mit hydroxylhaltigen Alkylresten verzichtet.
Diese führen zu Hydroxylgruppen in der Seitenkette, die gegebenenfalls die Verarbeitungs-stabilität reaktiver Schmelzklebstoffe vermindern können.

Vorzugsweise sind keine Monomere der Formel VI enthalten, d. h. insbesondere bevorzugt wird auf den Einsatz von Styrol oder Styrolderivaten verzichtet. Nicht polymerisierte Styrolmonomere können aus dem Klebstoff ausdunsten und zu einer starken Geruchsbelästigung sowie erhöhten Foggingwerten führen.

Die erfindungsgemäß verwendeten Poly(meth)acrylate können mittels Substanz-, Emulsions-, Suspensions-, Mini- bzw. Mikrosuspensions- oder Lösungspolymerisation hergestellt werden.

Die Polymerisation kann auch unter Verwendung eines Reglers erfolgen. Bei diesen Reglern kann es sich z. B. um Mercaptane wie n-Dodecylmercaptan, Thioglykolsäure, Mercaptoethanol oder Ethyl-hexylmercaptan handeln.

Die Mengen an Monomeren, die in der Polymerisation Polymertyp B bildend in der erfindungsgemäßen Mischung eingesetzt werden, liegen zwischen 10 Gew.-% und 90 Gew.-%, bevorzugt zwischen 20 Gew.-% und 80 Gew.-% und ganz besonders bevorzugt zwischen 40 Gew.-% und 75 Gew.-%.

Die Mengen, die an Polymertyp B in der erfindungsgemäßen Mischung nach der Reaktion vorliegen, liegen zwischen 1 Gew.-% und 80 Gew.-%, bevorzugt zwischen 1 Gew.-% und 60 Gew.-% und ganz besonders bevorzugt zwischen 5 Gew.-% und 40 Gew.-%.

In einer besonderen Ausführungsform sind die Monomere, die in der Polymerisation Polymertyp B bildend in der erfindungsgemäßen Mischung eingesetzt werden, ausgewählt aus der Gruppe umfassend Methyl(meth)acrylat, Ethyl(meth)acrylat, Propyl(meth)acrylat, Butyl(meth)acrylat und Ethylhexyl(meth)acrylat.

### Der Polymertyp AB

### Herstellung der Pfropfcopolymerisate AB

Das Verfahren zur Herstellung eines erfindungsgemäß eingesetzten Pfropfcopolymerisats AB zeichnet sich dadurch aus, dass durch Reaktion eines geeigneten, weiter unten beschriebenen Initiators mit Doppelbindungen von Wiederholungseinheiten ungesättigter, aliphatischer Dicarbonsäuren im Polymer des Typs A mehrere reaktive (radikalische) Zentren für eine radikalische Polymerisation von (Meth)acrylaten gebildet werden. Diese reaktiven Zentren können simultan oder auch zeitlich versetzt gebildet werden. Somit können Doppelbindungen im Polyester auch durchaus erst aktiviert werden, nachdem die an anderen Doppelbindungen im Polyester gebildeten Radikale durch Abbruchreaktionen deaktiviert wurden. Vorzugsweise wird daher das Polymer A mit dem Initiator vorgelegt und für eine Zeit zwischen 10 min und 60 min erhitzt, bevor eines oder mehrere der beschriebenen Monomere I-VI zur Bildung des Typs B zugegeben werden. Es können aber auch die Polymere des Typs A und die Monomere I-VI zur Bildung des Typs B zusammen vorgelegt werden, bevor die Polymerisation initiiert wird.

Das Pfropfpolymerisat AB wird in der Regel hergestellt, indem man auf die Komponente A die Komponente B unter den dafür geeigneten Reaktionsbedingungen aufpfropft. Bei dem Polymertyp AB handelt es sich um ein Pfropfcopolymerisat mit Polyesterhauptketten und Poly(meth)acrylatseitenketten.

Dazu stellt man eine 10 Gew.-% - 50 Gew.-%, vorzugsweise 20 Gew.-% - 30 Gew.-%-Lösung des erfindungsgemäßen Polyesters enthaltend Wiederholungseinheiten ungesättigter, aliphatischer Dicarbonsäuren in einem geeigneten, unter Polymerisationsbedingungen inerten Lösungsmittel, das im Normalfall einen Siedepunkt oberhalb der Verfahrenstemperatur besitzt, her. Als Lösungsmittel verwendet man die herkömmlichen Lösungsmittel für Lösungspolymerisationen, die für die entsprechenden Ester geeignet sind. So kommen z. B. Essigester wie Ethyl-, Propyl- oder Butylacetat, aliphatische Lösungsmittel wie Isooctan, cycloaliphatische wie Cyclohexan und carbonylische wie Butanon in Frage.

Zu den Polyester-Lösungen gibt man die Monomeren der Formel I bzw. eventuell die anderen Monomeren II-VI in den angegebenen Verhältnissen und polymerisiert unter Zusatz eines oder mehrerer, vorzugsweise peroxidischer Radikal-Initiatoren bei Temperaturen von -10 °C bis 100 °C, gewöhnlich innerhalb von 4-8 Stunden. Anzustreben ist ein möglichst vollständiger Umsatz. Vorzugsweise finden Azoverbindungen wie AIBN oder Perester wie tert.-Butylperoctoat als Radikalinitiator Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,1 Gew.-%, und 3 Gew.-%, bezogen auf das Polymerisat.

Gegebenenfalls können zur Einstellung des gewünschten Molekulargewichts der Segmente B noch Regler mit verwendet werden. Als Regler eignen sich z. B. Schwefelregler, insbesondere mercaptogruppenhaltige Regler, z. B. Dodecylmercaptan. Die Konzentrationen an Reglern liegen im Allgemeinen bei 0,1 Gew.-%, bis 1,0 Gew.-%, bezogen auf das Gesamtpolymerisat.

Neben der beschriebenen Methode der Lösungspolymerisation kann die Synthese der Pfropfcopolymere des Typs AB auch über Suspensionspolymerisation, Emulsionspolymerisation, Mini- oder Mikroemulsionspolymerisation oder Substanzpolymerisation dargestellt werden.

Beispielsweise werden bei der Substanzpolymerisation die Polyester vor der Initierung der radikalischen Polymerisation in der (meth)acrylischen Monomermischung gelöst.
Alternativ kann Radikal-Initiator auch in einer Schmelze des Polyesters vorgelegt und anschließend mit der Monomermischung versetzt werden.

Die Mengen an Polymertyp AB nach der Pfropfreaktion in der erfindungsgemäß eingesetzten Mischung liegen zwischen 10 Gew.-% und 98 Gew.-%, bevorzugt zwischen 20 Gew.-% und 70 Gew.-% und ganz besonders bevorzugt zwischen 30 Gew.-% und 60 Gew.-%, bezogen auf die Gesamtmasse der Polymertypen A, B, und AB.

Der durchschnittliche Anteil der Poly(meth)acrylate im Polymeranteil der Gesamtmischung beträgt zwischen 10 Gew.-% und 90 Gew.-%, bevorzugt zwischen 20 Gew.-% und 80 Gew.-% und ganz besonders bevorzugt zwischen 40 Gew.-% und 75 Gew.-%. Diese Angaben beziehen sich auf die Summe der Poly(meth)acrylate des Typs B und der Poly(meth)acrylat-Anteile in den Pfropfcopolymeren des Typs AB.

Die Mischung der Polymertypen A, B und AB kann ein Gewichtsmittel des Molekulargewichts M_{w} zwischen 5 000 und 100 000, bevorzugt zwischen 7 500 und 80 000 und ganz besonders bevorzugt zwischen 10 000 und 60 000 aufweisen. Das Gewichtsmittel des Molekulargewichts M_{W} wird mittels Gelpermeationschromatographie mit IR-Detektion nach DIN 55672-1 mit Tetahydrofuran als Eluent bestimmt.

Die Mischung der Polymertypen A, B und AB weist vorzugsweise eine Hydroxylzahl (OH-Zahl) von 0,5 bis 150 mg KOH/g, bevorzugt 1 bis 80 mg KOH/g und besonders bevorzugt 2 bis 50 mg KOH/g auf. Die Hydroxylzahl wird nach der DIN 53240-2 bestimmt.

Überraschend wurde gefunden, dass der Polymertyp AB ein hervorragender Verträglichkeitsvermittler zwischen Poly(meth)acrylaten und Polyestern ist.

Die Verbesserung der Kompatibilität zwischen Poly(meth)acrylaten und Polyestern führt zu neuen Schmelzklebstoffen mit positiven Eigenschaftsverbesserungen. Die Schmelzklebstoffe haben eine hohe Anfangsfestigkeit bei einstellbarer, langer offener Zeit. Sie verfügen zudem über eine gute Verarbeitungs- und Viskositätsstabilität in der Schmelze. Die Klebstoffe sind elastisch und haben eine hohe Kohäsion, thermische Beständigkeit und Lösungsmittelbeständigkeit. Sie weisen ein breites Haftungsspektrum zu einer Vielzahl von Substraten auf.

Ein weiterer Gegenstand der vorliegenden Erfindung sind Klebstoffe gemäß Anspruch 8 enthaltend Mischungen der Polymere A, B und AB, wobei der Polymertyp A ein Copolyester ist, der unter Co-Kondensation von ungesättigten, aliphatischen Dicarbonsäuren, vorzugsweise Itaconsäure, hergestellt wurde, der Polymertyp B ein (Meth)acrylathomo- und/oder - copolymer und der Polymertyp AB ein Pfropfcopolymer aus Polymertyp A und Polymertyp B ist. Bei den erfindungsgemäßen Klebstoffen handelt es sich um reaktive Schmelzklebstoffe (Reaktive Hotmelts, RHM), insbesondere feuchtigkeitsvernetzende Schmelzklebstoffe.

Insbesondere die erfindungsgemäßen feuchtigkeitsvernetzenden Schmelzklebstoffe enthalten zusätzlich Isocyanate und/oder Polyisocyanate. In den bevorzugten Klebstoffen beträgt das OH:NCO-Verhältnis von OHhaltigen Komponenten zu Isocyanat und/oder Polyisocyanat 1:1,2 bis 1:15, vorzugsweise von 1:1,4 bis 1:3.
In diesem Zusammenhang meint OH-haltige Komponente sowohl die erfindungsgemäßen Mischungen als auch alle Bestandteile des Klebstoffs mit OH-Gruppen.

Die Polyisocyanate können di- und/oder multifunktionelle, aromatische, aliphatische oder/und cycloaliphatische Isocyanate sein. Aromatische Polyisocyanate sind besonders bevorzugt. Beispiele für Polyisocyanate sind 4,4'-Diphenylmethandiisocyanat, 2,4'-Diphenylmethandiisocyanat,

Toluoldiisocyanat-Isomere, Isophorondiisocyanat, Hexamethylendiisocyanat, 4,4'-Dicyclohexylmethandiisocyanat und Mischungen daraus. Insbesondere handelt es sich um 4,4'-Diphenylmethandiisocyanat und Mischungen aus 4,4'-Diphenylmethandiisocyanat und 2,4'-Diphenylmethandiisocyanat.

In den reaktiven Schmelzklebstoffen beträgt der Anteil der erfindungsgemäßen Mischungen enthaltend Polyester-pfropf-Polyacrylate 1 - 99 Gew.-%, bevorzugt 1 - 70 Gew.-% und ganz besonders bevorzugt 1- 50 Gew.- %.

In bevorzugten Ausführungsformen sind in den Schmelzklebstoffen neben den erfindungsgemäß eingesetzten Mischungen enthaltend Polyester-pfropf-Polyacrylate auch andere Polyole vorhanden, unter denen Polyesterpolyole, Polyetherpolyole und beliebige hydroxylfunktionelle Komponenten zu verstehen sind.

Die beigemischten Polyesterpolyole können flüssige und/oder feste, amorphe und/oder (teil-)kristalline Polyester beliebiger Struktur mit Molekulargewichten Mn zwischen 1000 g/mol und 30000 g/mol, bevorzugt zwischen 2000 g/mol und 10000 g/mol (berechnet aus der Hydroxylzahl) sein, wobei lineare Polyesterpolyole bevorzugt verwendet werden. Die beigemischten Polyetherpolyole sind Polyetherdi- und -triole. Beispiele hierfür sind Homo- und Copolymere aus Ethylenglykol, Propylenglykol und Butandiol-1,4. Das Molekulargewicht Mn der beigemischten Polyetherpolyole sollte in einem Bereich von 200 g/mol bis 10000 g/mol, bevorzugt zwischen 400 g/mol und 6000 g/mol sein.

Beispiele für beliebige hydroxyfunktionelle Komponenten sind funktionalisierte (H-acide), thermoplastische Polyurethane (TPU) und/oder Polyacrylate und/oder Ethylen-Vinylacetatcopolymere (EVA).

Die erfindungsgemäßen Schmelzklebstoffe können bis zu 50 Gew. % an weiteren Zusätzen enthalten. Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze; und/oder Alterungsschutz- und Hilfsmittel.

Die erfindungsgemäßen Klebstoffe lassen sich auf einfache Weise herstellen. Werden, gemäß einer bevorzugten Ausführungsform, weitere Komponenten mit der erfindungsgemäß eingesetzten Mischung angewandt, so erfolgt die Herstellung des Klebstoffs im einfachsten Fall durch Mischen der Mischung und der zusätzlichen Komponenten. Das Mischen kann mit oder ohne Lösungsmittel, vorzugsweise ohne Lösungsmittel und ganz besonders bevorzugt in der Schmelze erfolgen. Das Mischen kann zum Beispiel in einem Rührbehälter, einem Kneter oder einem Extruder erfolgen. Die Aufschmelztemperatur richtet sich nach der Viskosität der Bestandteile. Sie liegt üblicherweise in einem Bereich von 100 bis 180 °C.

Die erfindungsgemäßen Klebstoffe eignen sich in besonderer Weise zur Herstellung von Verklebungen und Dichtstoffen. Insbesondere eignen sich die erfindungsgemäßen Schmelzklebstoffe zur Verklebung einer Vielzahl von Substraten, insbesondere zur Verklebung von metallischen Substraten, diversen Kunststoffen, Holz, Faserverbundstoffen, Papier, Textilien und Leder. Die Art und der Umfang der Verklebung sind dabei nicht limitiert. Insbesondere handelt es sich bei den Verklebungen um Verklebungen in der Bau-, Holz- und Möbelindustrie, im Fensterbau, im Automobilbereich, in der Textilindustrie, graphischen Industrie, Verpackungsindustrie und/oder in der Schuhindustrie.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Beispiele:

### Herstellung der erfindungsgemäßen Copolyester (Polymertyp A)

Vergleichsbeispiel V1:
Isophthalsäure (434 g, 2.6 mol); Terephthalsäure (290 g, 1.7 mol),
Monoethylenglykol (120 g, 1.9 mol), Neopentylglykol (129 g, 1.2 mol) und
Hexandiol-1,6 (211 g, 1.8 mol) werden in einem 2 I-Kolben mit Kolonne und
Destillationsaufsatz im Stickstoffstrom aufgeschmolzen. Bei Erreichen einer Temperatur von 170 °C beginnt Wasser abzudestillieren. Innerhalb von zwei Stunden wird die Temperatur sukzessive auf 240 °C erhöht. Nach etwa vier weiteren Stunden bei dieser Temperatur verlangsamt sich die Wasserabspaltung. Es werden 150 mg Titantetrabutoxid eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Charakteristika von Polyester V1 sind in Tabelle 1 gezeigt.

### Beispiel 1:

Isophthalsäure (453 g, 2.73 mol); Terephthalsäure (216 g, 1.30 mol), Monoethylenglykol (130 g, 2,1 mol), Neopentylglykol (190 g, 1.83 mol) und Hexandiol-1,6 (154 g, 1.31 mol) werden in einem 2 I-Kolben mit Kolonne und Destillationsaufsatz im Stickstoffstrom aufgeschmolzen. Bei Erreichen einer Temperatur von 180 °C beginnt Wasser abzudestillieren. Innerhalb von zwei Stunden wird die Temperatur sukzessive auf 240 °C erhöht. Nach etwa vier weiteren Stunden bei dieser Temperatur verlangsamt sich die Wasserabspaltung. Die Temperatur wird auf 215 °C reduziert. Dann werden Itaconsäure (40 g, 0.31 mol) und 100 mg MEHQ für eine Stunde eingerührt. Anschließend werden 300 mg Tegokat 129 eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Charakteristika von Polyester 1 sind in Tabelle 1 gezeigt.

### Beispiel 2

Adipinsäure (577 g, 3.95 mol); Itaconsäure (39 g, 0.30 mol), Hexandiol-1,6 (546 g, 4.63 mol) und 100 mg MEHQ werden in einem 2 I-Kolben mit Kolonne und Destillationsaufsatz im Stickstoffstrom aufgeschmolzen. Bei Erreichen einer Temperatur von 160 °C beginnt Wasser abzudestillieren. Innerhalb von zwei Stunden wird die Temperatur sukzessive auf 215 °C erhöht. Nach etwa drei weiteren Stunden bei dieser Temperatur verlangsamt sich die Wasserabspaltung. Es werden 300 mg Tegokat 129 eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Charakteristika von Polyester 2 sind in Tabelle 1 gezeigt.

### Beispiel 3

Isophthalsäure (464 g, 2.80 mol); Terephthalsäure (221 g, 1.33 mol), Monoethylenglykol (127 g, 2.05 mol), Neopentylglykol (186 g, 1.78 mol) und Hexandiol-1,6 (150 g, 1.27 mol) werden in einem 2 I-Kolben mit Kolonne und Destillationsaufsatz im Stickstoffstrom aufgeschmolzen. Bei Erreichen einer Temperatur von 185 °C beginnt Wasser abzudestillieren. Innerhalb zwei Stunden wird die Temperatur sukzessive auf 245 °C erhöht. Nach etwa drei weiteren Stunden bei dieser Temperatur verlangsamt sich die Wasserabspaltung. Die Temperatur wird auf 215 °C reduziert. Dann werden Itaconsäure (41 g, 0.31 mol) und 500 mg MEHQ für eine Stunde eingerührt. Anschließend werden 300 mg Tegokat 129 eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Charakteristika von Polyester 3 sind in Tabelle 1 gezeigt.

**Tabelle 1: Eigenschaften des Polymertyps A**

| Beispiel-Nr. | ITA | OHZ | SZ | M_{w} (UV) | PMI (UV) |
|---|---|---|---|---|---|
| V1 | 0 | 20 | 1,2 | 18 900 | 1,7 |
| 1 | 4,8 | 64 | 1,4 | 6400 | 1,6 |
| 2 | 4,6 | 36 | 1,2 | 13 600 | 1,8 |
| 3 | 3,2 | 37 | 1,3 | 10 700 | 1,8 |

| | | | | | |
|---|---|---|---|---|---|
| ITA = Gehalt an Itaconatwiederholungseinheiten im Copolyester, bezogen auf den Gesamtgehalt an Polycarbonsäuren, Angabe in Mol-%, gemessen mit ¹H-NMR-Spektroskopie OHZ = Hydroxylzahl, Angabe in mg KOH/g, gemessen nach DIN 53240-2 SZ = Säurezahl, Angabe in mg KOH/g, gemessen nach DIN EN ISO 2114 M_{w} (UV) = Massenmittleres Molgewicht (GPC, UV-Detektion), Angabe in g/mol Mₙ (UV) = Zahlenmittleres Molgewicht (GPC, UV-Detektion), Angabe in g/mol PMI (UV) = Polymolekularitätsindex = M_{w} (UV) / Mₙ (UV), bestimmt nach DIN 55672-1 in Tetrahydrofuran als Eluent. MEHQ = 4-Methoxyphenol Tegokat 129 = Zinn(II)Octoat; Produkt von Goldschmidt TIB Mannheim GmbH | | | | | |

### Herstellung der Mischungen aus den Polymertypen A, B und AB

### Beispiele für Lösungspolymerisation

### Beispiel 4

In einem Doppelmantelgefäß mit angeschlossenem Thermostaten, Rückflusskühler, Blattrührer und Innenthermometer werden 25 g Propylacetat und 13 g Polyester aus Beispiel 1 vorgelegt. Unter Rühren wird der Polyester bei 85 °C vollständig aufgelöst und anschließend mit 0,06 g t-Butyl-per-2-ethylhexanoat versetzt. Um eine optimale Ausbeute freier Radikale entlang der Polyesterketten zu bilden, wird diese Lösung über einen Zeitraum von 30 min bei 85 °C gerührt, bevor mittels einer Dosierpumpe 12,8 g Methylmethacrylat, 6,4 g n-Butylacrylat, 0,38 g 2-Ethylhexylthioglycolat und weitere 0,2 g t-Butyl-per-2-ethylhexanoat innerhalb von 3 h zudosiert werden. Anschließend werden weitere 0,15 g t-Butyl-per-2-ethylhexanoat über einen Zeitraum von 120 min zudosiert. Nach weiterem 60 min bei 85 °C und 60 min bei 100 °C wird die Polymerlösung abgekühlt und mit Hilfe eines Rotationsverdampfers getrocknet.

### Beispiel 5

Analoge Durchführung zu Beispiel 4 unter Verwendung von 9,6 g Methylmethacrylat und 9,6 g n-Butylacrylat anstelle der dort angegebenen Mengen.

### Beispiel 6

In einem Doppelmantelgefäß mit angeschlossenem Thermostaten, Rückflusskühler, Blattrührer und Innenthermometer werden 33 g Propylacetat und 12 g Polyester 1 vorgelegt. Unter Rühren wird der Polyester bei 85 °C vollständig aufgelöst und anschließend mit 0,08 g t-Butyl-per-2-ethylhexanoat versetzt. Um eine optimale Ausbeute freier Radikale entlang der Polyesterketten zu bilden, wird diese Lösung über einen Zeitraum von 30 min bei 85 °C gerührt, bevor mittels einer Dosierpumpe 18,7 g Methylmethacrylat, 9,3 g n-Butylacrylat, 0,56 g 2-Ethylhexylthioglycolat und weitere 0,25 g t-Butyl-per-2-ethylhexanoat innerhalb von 3 h zudosiert werden. Anschließend werden weitere 0,25 g t-Butyl-per-2-ethylhexanoat über einen Zeitraum von 120 min zudosiert. Nach weiterem 60 min bei 85 °C und 60 min bei 100 °C wird die Polymerlösung abgekühlt und mit Hilfe eines Rotationsverdampfers getrocknet.

### Beispiel 7

In einem Doppelmantelgefäß mit angeschlossenem Thermostaten, Rückflusskühler, Blattrührer und Innenthermometer werden 25 g Propylacetat und 13 g Polyester aus Beispiel 2 vorgelegt. Unter Rühren wird der Polyester bei 85 °C vollständig aufgelöst und anschließend mit 0,06 g t-Butyl-per-2-ethylhexanoat versetzt. Um eine optimale Ausbeute freier Radikale entlang der Polyesterketten zu bilden, wird diese Lösung über einen Zeitraum von 30 min bei 85 °C gerührt, bevor mittels einer Dosierpumpe 12,8 g n-Butylmethacrylat, 6,4 g Ethylhexylmethacrylat, 0,38 g 2-Ethylhexylthioglycolat und weitere 0,2 g t-Butyl-per-2-ethylhexanoat innerhalb von 3 h zudosiert werden. Anschließend werden weitere 0,15 g t-Butyl-per-2-ethylhexanoat über einen Zeitraum von 120 min zudosiert. Nach weiterem 60 min bei 85 °C und 60 min bei 100 °C wird die Polymerlösung abgekühlt. Abschließend wird das Lösungsmittel mit Hilfe eines Rotationsverdampfers entfernt.

Die Mischung hat einen Schmelzpunkt von 30 °C, bestimmt nach der DSC-Methode, 2.Aufheizung (DIN 53765)

### Beispiel 8

Analoge Durchführung zu Beispiel 6 unter Verwendung des Polyesters aus Beispiel 3 anstelle des Polyesters aus Beispiel 1.

### Vergleichsbeispiel V2

Analoge Durchführung zu Beispiel 4 unter Verwendung des Polyesters aus Vergleichsbeispiel V1 anstelle des Polyesters aus Beispiel 1.

In Tabelle 2 sind die Ergebnisse der Pfropfversuche aus den Beispielen 4 bis 8 und des Vergleichsbeispiels V2 zusammengefasst:

| | Start-Polyester | | | Pfropfprodukt (Mischung) | | | | | |
|---|---|---|---|---|---|---|---|---|---|
| Beispiel-Nr. | Nr. | ITA | M_{w} (UV) | ITA_{graft} | M_{w} (UV) | M_{w} (RI) | PMI (RI) | OHZ | Tg |
| V2 | V1 | 0 | 18 900 | 0 | 18 400 | 28 800 | 2,0 | 7 | 30/ 37 |
| 4 | 1 | 4,8 | 6400 | 0,5 | 20 000 | 28 500 | 4,7 | 21 | 27 |
| 5 | 1 | 4,8 | 6400 | 1,1 | 26 000 | 36 000 | 6,0 | 22 | 15 |
| 6 | 1 | 4,8 | 6400 | 0,4 | 17 000 | 25 500 | 2,5 | 17 | 22 |
| 7 | 2 | 4,6 | 13 600 | 0,2 | 30 500 | 31 100 | 3.0 | 13 | |
| 8 | 3 | 3,2 | 10 700 | 0,3 | 43 800 | 44 300 | 4,0 | 12 | 35 |

| | | | | | | | | | |
|---|---|---|---|---|---|---|---|---|---|
| ITA_{graft} = Gehalt an Itaconatwiederholungseinheiten im Copolyester(-block) des Pfropfproduktes, bezogen auf dessen Gesamtgehalt an Polycarbonsäuren, Angabe in Mol-%, gemessen mit ¹H-NMR-Spektroskopie M_{w} (RI) = Massenmittleres Molgewicht (GPC, RI-Detektion), Angabe in g/mol Mₙ (RI) = Zahlenmittleres Molgewicht (GPC, RI-Detektion), Angabe in g/mol PMI (RI) = Polymolekularitätsindex = M_{w} (RI) / Mₙ (RI), bestimmt nach DIN 55672-1 mit Tretahydrofuran als Eluent. OHZ= Hydroxylzahl, Angabe in mg KOH/g, bestimmt nach DIN 53240-2 Tg= Glasübergangstemperatur, Angabe in °C, bestimmt nach DIN 53765 | | | | | | | | | |

### Herstellung und Charakterisierung der erfindungsgemäßen Schmelzklebstoffe

Die in den nachfolgenden Beispielen beschriebenen, feuchtigkeitshärtenden Schmelzklebstoffe (RHM) werden anhand ihrer Schmelzeviskosität bei 130 °C (Brookfield Thermosel, Spindel Nr. 27), des Viskositätsanstiegs nach 24h Lagerung in einer Kartusche, ihrer offenen Zeit und Abbindezeit, der visuellen Beurteilung der Schmelze sowie ihrer Zugfestigkeit und Dehnung nach DIN 53504 eines 500 µm Films, der 7 Tage bei 20 °C und 65% relativer Feuchte gehärtet wurde, charakterisiert.

Zur Bestimmung der offenen Zeit wird aus der 130 °C warmen Klebstoffschmelze ein 0,5 mm dicker Film appliziert. In Abhängigkeit von der Zeit werden Streifen eines offenporigen Papiers in den Film gedrückt. Nachdem die Oberfläche des Klebstofffilms klebfrei ist, werden die Streifen abgezogen. Die offene Zeit ist der Zeitpunkt, bei dem der Papierstreifen nicht mehr ausreichend benetzt wurde und kein Faserausriss mehr beobachtet wird.

Zur Bestimmung der Abbindezeit wird der 130 °C warme Klebstoff auf eine Seite eines Holzquaders mit einer Fläche von 25 mm x 25 m dünn aufgetragen und sofort mit einem zweiten Holzquader der gleichen Grundfläche gefügt. Die Abbindezeit gibt an, wie lange sich die Holzstücke manuell gegeneinander verschieben lassen. Je geringer die Zeitspanne ist, desto günstiger ist das Abbindeverhalten des Schmelzklebstoffs.

### Beispiel RHM-Nr.1

In einem 500 ml Planschliffkolben werden 33 Gewichtsteile der Mischung aus Beispiel 4, 33 Gewichtsteile DYNACOLL 7231 und 33 Gewichtsteile DYNACOLL 7360 bei 140 °C aufgeschmolzen. Nach Trocknung im Vakkuum bei 130 °C wird Lupranat ME in einem molaren OH/NCO-Verhältnis von 1/2,2 zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schmelzklebstoff abgefüllt. Der resultierende Schmelzklebstoff ist in der Schmelze trüb und besitzt eine Schmelzviskosität (130 °C) von 17 Pa·s. Der Viskositätsanstieg beträgt 200 %. Der Klebstoff hat eine offene Zeit von 480 Sekunden und eine Abbindezeit von 50 Sekunden. Die Zugfestigkeit beträgt 24 N/mm², die Dehnung 780%.

### Vergleichsbeispiel RHM-Nr.2

Die Durchführung erfolgt analog Beispiel RHM-Nr. 1, wobei die Mischung aus Beispiel 4 durch die Mischung aus Vergleichsbeispiel V2 ersetzt ist. Der resultierende Schmelzklebstoff enthält Gelteilchen, ist inhomogen und separiert in zwei Phasen. Eine weitere Charakterisierung ist nicht möglich.

Der Vergleich der beiden vorhergehenden Beispiele zeigt die deutlich verbesserte Verträglichkeit von Polyestern und Polyacrylaten bei Einsatz der erfindungsgemäßen Mischung.

### Vergleichsbeispiel RHM-Nr.3

In einem 500 ml Planschliffkolben werden 24 Gewichtsteile Elvacite 2901 bei 180 °C aufgeschmolzen. Danach werden 44 Gewichtsteile Voranol 200 L und 18 Gewichtsteile DYNACOLL 7360 zugegeben. Die Mischung wird auf 130 °C abgekühlt und im Vakuum getrocknet. Lupranat ME wird in einem molaren OH/NCO-Verhältnis von 1/1,65 zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schmelzklebstoff abgefüllt. Der resultierende Schmelzklebstoff ist transparent und besitzt eine Schmelzviskosität (130 °C) von 10 Pa·s. Der Viskositätsanstieg beträgt 340 %. Der Klebstoff hat eine offene Zeit von 460 Sekunden und eine Abbindezeit von 150 Sekunden. Die Zugfestigkeit beträgt 9 N/mm², die Dehnung 780 %.

### RHM- Beispiele Nr. 4- 10

Die Durchführung erfolgt analog Beispiel RHM-Nr. 1 gemäß der in Tabelle 3 angegebenen Zusammensetzungen.

**Tabelle 3: Eigenschaften der feuchtigkeitshärtbaren Schmelzklebstoffe**

| **RHM-Nr.** | **4** | **5** | **6** | **7** | **8** | **9** | **10** |
|---|---|---|---|---|---|---|---|
| **Zusammensetzung** | | | | | | | |
| Polyester V1 | 33 | | | | | | |
| Mischung 4 | | 33 | | | | | |
| Mischung 5 | | | 33 | | | | |
| Mischung 6 | | | | 33 | | | |
| Mischung 7 | | | | | 33 | 20 | |
| Mischung 8 | | | | | | | 20 |
| DYNACOLL 7231 | 33 | 23 | 33 | 33 | 33 | | 33 |
| DYNACOLL 7250 | | | | | | 33 | |
| DYNACOLL 7360 | 33 | 23 | 33 | 33 | 33 | 46 | 46 |
| DYNACOLL 7380 | | 20 | | | | | |
| Lupranat ME, OH/NCO | 1 / 2,2 | 1 / 2,2 | 1 /2,2 | 1 / 2,2 | 1/ 2,2 | 1/ 2,2 | 1/ 2,2 |

| **RHM**-**Eigenschaften** | | | | | | | |
|---|---|---|---|---|---|---|---|
| Viskosität 130 °C, Pas | 13 | 14 | 18 | 10 | 9 | 8 | 15 |
| Viskositätsanstieg, % | 160 | 200 | 210 | 230 | 140 | 160 | 220 |
| Offene Zeit, sec | 600 | 150 | 720 | 600 | 270 | 300 | 330 |
| Abbindezeit, sec | 720 | 25 | 70 | 100 | 70 | 70 | 80 |
| Aussehen Schmelze | t | o | tr | tr | o | tr | t |
| Zugfestigkeit, N/mm² | 35 | 30 | 23 | 20 | 15 | 17 | 21 |
| Dehnung,% | 310 | 660 | 940 | 800 | 1200 | 1150 | 860 |

| | | | | | | | |
|---|---|---|---|---|---|---|---|
| t= transparent, o= opak, tr= trüb RHM Beispiel 4 ist ein Vergleichsbeispiel | | | | | | | |

Lupranat ME ist ein 4,4'-Diphenylmethandiisocyanat (MDI) der Fa. BASF DYNACOLL 7231 ist ein flüssiger Polyester der Fa. Degussa mit Tg = - 30 °C und Hydroxylzahl 30 mg KOH/g.

DYNACOLL 7250 ist ein flüssiger Polyester der Fa. Degussa mit Tg = - 50 °C und Hydroxylzahl 20 mg KOH/g.

DYNACOLL 7360 ist ein kristalliner Polyester der Fa. Degussa mit Schmelzpunkt 55 °C und Hydroxylzahl 30 mg KOH/g.

DYNACOLL 7380 ist ein kristalliner Polyester der Fa. Degussa mit Schmelzpunkt 70°C und Hydroxylzahl 30 mg KOH/g.

Elvacite 2901 ist ein hydroxylgruppenhaltiges Polyalkyl (meth)acrylat der Fa. Lucite, OH-Zahl 6 mg KOH/g

Voranol 2000 L ist ein Polypropylenglykol mit einem Molekulargewicht von ca. 2000 g/mol der Fa. Dow

Die Beispiele zeigen die deutlich verkürzte Abbindezeit bei Einsatz der erfindungsgemäßen Mischungen gegenüber Formulierungen auf Basis von Polyestermischungen mit langer offener Zeit nach dem Stand der Technik. Sie zeigen auch die verkürzte Abbindezeit, die verbesserte Verarbeitungsstabilität und Kohäsion bei Einsatz der erfindungsgemäßen Mischungen gegenüber Formulierungen auf der Basis von Polyacrylaten, Polyethern und Polyestern nach dem Stand der Technik.

## Patentansprüche

1. Verwendung von Mischungen umfassend Polymertypen A, B und AB als Klebstoff oder in Klebstoffen, wobei der Polymertyp A ein Copolyester ist, der unter Co-Kondensation von ungesättigten, aliphatischen Dicarbonsäuren hergestellt wurde, der Polymertyp B ein (Meth)acrylathomo- und/oder -copolymer und der Polymertyp AB ein Pfropfcopolymer aus Polymertyp A und Polymertyp B ist, **dadurch gekennzeichnet, dass** es sich bei dem Polymertyp AB um Pfropfcopolymere mit Polyesterhauptketten und Poly(meth)acrylatseitenketten handelt und dass es sich bei den Klebstoffen um reaktive Schmelzklebstoffe handelt.

2. Verwendung gemäß Anspruch 1, **dadurch gekennzeichnet, dass** die ungesättigte aliphatische Dicarbonsäure ausgewählt ist aus Fumarsäure, Maleinsäure, Itaconsäure und ihren veresterbaren Derivaten.

3. Verwendung gemäß Anspruch 1 oder 2, **dadurch gekennzeichnet, dass** die ungesättigte aliphatische Dicarbonsäure Itaconsäure ist.

4. Verwendung gemäß einem oder mehreren der Ansprüche 1 bis 3,
**dadurch gekennzeichnet, dass** die Menge an Polymertyp A zwischen 5 und 80 Gew.-% beträgt, die Menge an Polymertyp B zwischen 5 und 80 Gew.-% beträgt und die Menge an Polymertyp AB zwischen 10 und 98 Gew.-% beträgt, bezogen auf die Gesamtmasse der Polymertypen A, B, AB.

5. Verwendung gemäß einem oder mehreren der Ansprüche 1 bis 4,
**dadurch gekennzeichnet, dass** es sich bei Polymertyp A um einen Co-Polyester handelt, dessen Anteil an ungesättigten, aliphatischen Dicarbonsäuren, vorzugsweise Itaconsäure, bezogen auf die Gesamtmenge an eingesetzten Polycarbonsäuren zwischen 0,1 Mol-% und 20 Mol-% beträgt.

6. Verwendung gemäß einem oder mehreren der Ansprüche 1 bis 5,
**dadurch gekennzeichnet, dass** das Produkt kein Styrol oder Styrolderivat enthält.

7. Verwendung gemäß einem oder mehreren der Ansprüche 1 bis 6,
**dadurch gekennzeichnet, dass** der durchschnittliche Anteil der Poly(meth)acrylate-Anteile in der Gesamtmischung zwischen 10 Gew.-% und 90 Gew.-% beträgt.

8. Reaktive Schmelzklebstoffe enthaltend Mischungen der Polymere A, B und AB, wobei der Polymertyp A ein Copolyester ist, der unter Co-Kondensation von ungesättigten, aliphatischen Dicarbonsäuren hergestellt wurde, der Polymertyp B ein (Meth)acrylathomo- und/oder - copolymer und der Polymertyp AB ein Pfropfcopolymer aus Polymertyp A und Polymertyp B ist., **dadurch gekennzeichnet, dass** es sich bei dem Polymertyp AB um Pfropfcopolymere mit Polyesterhauptketten und Poly(meth)acrylatseitenketten handelt und dass sie zusätzlich Isocyanate und/oder Polyisocyanate enthalten.

9. Klebstoffe gemäß Anspruch 8, **dadurch gekennzeichnet, dass** die ungesättigte, aliphatische Dicarbonsäure Itaconsäure ist.

10. Klebstoffe gemäß Anspruch 8 oder 9, **dadurch gekennzeichnet, dass** sie zusätzlich andere Polyole, nichtfunktionalisierte Polymere, Pigmente bzw. Füllstoffe, Tackifier, und/oder Alterungsschutz- und Hilfsmittel enthalten.

11. Verwendung von Klebstoffen gemäß einem oder mehreren der Ansprüche 8 bis 10 zur Herstellung von Verklebungen und Dichtstoffen.

12. Verwendung gemäß Anspruch 11, **dadurch gekennzeichnet, dass** es sich bei den Verklebungen um Verklebungen in der Holz- und Möbelindustrie, im Automobilbereich, in der Bauindustrie, Schuhindustrie, Verpackungsindustrie und Textilindustrie, graphischen Industrie und/oder im Fensterbau handelt.

## Claims

1. Use of mixtures comprising polymer types A, B and AB as or in adhesives, polymer type A being a copolyester prepared with cocondensation of unsaturated aliphatic dicarboxylic acids, polymer type B being a (meth)acrylate homopolymer and/or copolymer, and polymer type AB being a graft copolymer of polymer type A and polymer type B, **characterized in that** polymer type AB comprises graft copolymers with polyester main chains and poly(meth)acrylate side chains and **in that** the adhesives comprise reactive hotmelt adhesives.

2. Use according to Claim 1, **characterized in that** the unsaturated aliphatic dicarboxylic acid is selected from fumaric acid, maleic acid, itaconic acid and esterifiable derivatives thereof.

3. Use according to Claim 1 or 2, **characterized in that** the unsaturated aliphatic dicarboxylic acid is itaconic acid.

4. Use according to one or more of Claims 1 to 3, **characterized in that** the amount of polymer type A is between 5% and 80% by weight, the amount of polymer type B is between 5% and 80% by weight and the amount of polymer type AB is between 10% and 98% by weight, based on the total mass of polymer types A, B and AB.

5. Use according to one or more of Claims 1 to 4, **characterized in that** polymer type A is a copolyester whose unsaturated aliphatic dicarboxylic acid content, preferably itaconic acid content, based on the total amount of polycarboxylic acids used, is between 0.1 mol% and 20 mol%.

6. Use according to one or more of Claims 1 to 5, **characterized in that** the product contains no styrene or styrene derivative.

7. Use according to one or more of Claims 1 to 6, **characterized in that** the average fraction of the poly(meth)acrylate fractions in the total mixture is between 10% and 90% by weight.

8. Reactive hotmelt adhesives containing mixtures of polymers A, B and AB, polymer type A being a copolyester prepared with cocondensation of unsaturated aliphatic dicarboxylic acids, polymer type B being a (meth)acrylate homopolymer and/or copolymer, and polymer type AB being a graft copolymer of polymer type A and polymer type B, **characterized in that** polymer type AB comprises graft copolymers with polyester main chains and poly (meth) acrylate side chains and **in that** they further contain isocyanates and/or polyisocyanates.

9. Adhesives according to Claim 8, **characterized in that** the unsaturated aliphatic dicarboxylic acid is itaconic acid.

10. Adhesives according to Claim 8 or 9, **characterized in that** they further contain other polyols, non-functionalized polymers, pigments and/or fillers, tackifiers, and/or ageing inhibitors and auxiliaries.

11. Use of adhesives according to one or more of Claims 8 to 10 for producing adhesive bonds and sealants.

12. Use according to Claim 11, **characterized in that** the adhesive bonds are bonds in the wood and furniture industries, in the automotive sector, in the construction industry, footwear industry, packaging industry and textile industry, graphic industry and/or in window construction.

## Revendications

1. Utilisation de mélanges comprenant les types de polymères A, B et AB, en tant qu'adhésifs ou dans des adhésifs, le type de polymère A étant un copolyester qui a été préparé par co-codensation d'acides dicarboxyliques aliphatiques insaturés, le type de polymère B étant un homo- et/ou un copolymère de (méth)acrylate, et le type de polymère AB étant un polymère greffé constitué du type de polymère A et du type de polymère B, **caractérisée en ce que**, pour ce qui concerne le type de polymère AB, il s'agit de copolymères greffés comprenant des chaînes principales de polyester et des chaînes latérales de poly(méth)acrylate, et que, pour ce qui concerne les adhésifs, il s'agit d'adhésifs fusibles réactifs.

2. Utilisation selon la revendication 1, **caractérisée en ce que** l'acide dicarboxylique aliphatique insaturé est choisi parmi l'acide fumarique, l'acide maléique, l'acide itaconique et les dérivés estérifiables de ceux-ci.

3. Utilisation selon la revendication 1 ou 2, **caractérisée en ce que** l'acide dicarboxylique aliphatique insaturé est l'acide itaconique.

4. Utilisation selon l'une ou plusieurs des revendications 1 à 3, **caractérisée en ce que** la quantité du type de polymère A est comprise entre 5 et 80 % en poids, la quantité du type de polymère B est comprise entre 5 et 80 % en poids, et la quantité du type de polymère AB est comprise entre 10 et 98 % en poids, par rapport à la masse totale des types de polymères A, B et AB.

5. Utilisation selon l'une ou plusieurs des revendications 1 à 4, **caractérisée en ce que**, pour ce qui concerne le type de polymère A, il s' agit d'un co-polyester dans lequel la proportion des acides dicarboxyliques aliphatiques insaturés, de préférence l'acide itaconique, rapportée à la quantité totale des acides polycarboxyliques utilisés, est comprise entre 0,1 % en moles et 20 % en moles.

6. Utilisation selon l'une ou plusieurs des revendications 1 à 5, **caractérisée en ce que** le produit ne contient ni styrène, ni dérivé du styrène.

7. Utilisation selon l'une ou plusieurs des revendications 1 à 6, **caractérisée en ce que** la proportion moyenne des proportions de poly(méth)acrylates dans le mélange total est comprise entre 10 % en poids et 90 % en poids.

8. Adhésifs fusibles réactifs contenant des mélanges des polymères A, B et AB, le type de polymère A étant un copolyester qui a été préparé par co-condensation d'acides dicarboxyliques aliphatiques insaturés, le type de polymère B étant un homo- et/ou un copolymère de (méth)acrylate, et le type de polymère AB étant un copolymère greffé constitué du type de polymère A et du type de polymère B, **caractérisés en ce que**, pour ce qui concerne le type de polymère AB, il s'agit de copolymères greffés comprenant des chaînes principales de polyester et des chaînes latérales de poly(méth)acrylate, et qu'ils contiennent en outre des isocyanates et/ou des polyisocyanates.

9. Adhésifs selon la revendication 8, **caractérisés en ce que** l'acide dicarboxylique aliphatique insaturé est l'acide itaconique.

10. Adhésifs selon la revendication 8 ou 9, **caractérisés en ce qu'**ils contiennent en outre d'autres polyols, des polymères non fonctionnalisés, des pigments ou des charges, des agents de pégosité et/ou des agents de protection contre le vieillissement et des agents auxiliaires.

11. Utilisation d'adhésifs selon l'une ou plusieurs des revendications 8 à 10 pour la fabrication de collages et de matériaux d'étanchéité.

12. Utilisation selon la revendication 11, **caractérisée en ce que**, pour ce qui concerne les collages, il s'agit de collages dans l'industrie du bois et du meuble, dans le domaine automobile, dans l'industrie de la construction, dans l'industrie de la chaussure, dans l'industrie de l'emballage et dans l'industrie textile, dans l'industrie graphique et/ou dans la construction des fenêtres.
